# EUROPÄISCHE PATENTSCHRIFT

(11) **EP 2 288 539 B1**
(45) Veröffentlichungstag und Bekanntmachung des Hinweises auf die Patenterteilung: **18.09.2013**
(21) Anmeldenummer: 09725196.1
(22) Anmeldetag: 11.03.2009
(51) Int. Cl.: B64D 11/00

(54) **ERGONOMISCHE UND PLATZSPARENDE ANORDNUNG VON MONUMENTEN UNTER EINEM RUHERAUM IN EINEM FLUGZEUG**
ERGONOMIC AND SPACE-SAVING ARRANGEMENT OF STRUCTURES UNDER A REST AREA IN AN AIRCRAFT
AGENCEMENT ERGONOMIQUE ET A FAIBLE ENCOMBREMENT, DE STRUCTURES SOUS UNE ZONE DE REPOS DANS UN AERONEF

(30) Priorität: 26.03.2008 DE 102008015788; 26.03.2008 US 70892
(43) Veröffentlichungstag der Anmeldung: 02.03.2011
(73) Patentinhaber: Airbus Operations GmbH, 21129 Hamburg (DE)
(72) Erfinder: SÜTTHOFF, Thomas, 20255 Hamburg (DE); BREUER, Matthias, 22147 Hamburg (DE); HELFRICH, Felix, 21147 Hamburg (DE)
(74) Vertreter: Maiwald Patentanwalts GmbH
(86) Internationale Anmeldenummer: PCT/EP2009/052861
(87) Internationale Veröffentlichungsnummer: WO 2009/118242

(56) Entgegenhaltungen:
- EP-A- 0 901 964
- US-A- 4 994 722
- US-A1- 2004 227 034
- US-B1- 6 464 169
- US-B1- 6 520 451

## Beschreibung

### VERWANDTE ANMELDUNGEN

Die vorliegende Anmeldung beansprucht die Priorität der US Provisional Patentanmeldung Nr. 61/070 892, eingereicht am 26. März 2008 und der deutschen Patentanmeldung Nr. 10 2008 015 788.0, eingereicht am 26. März 2008.

### TECHNISCHES GEBIET DER ERFINDUNG

Die Erfindung betrifft eine Ruheraumanordnung in einem Flugzeug.

### TECHNOLOGISCHER HINTERGRUND DER ERFINDUNG

Ruheräume in einem Flugzeug sind bereits hinlänglich bekannt und dienen bei Langstreckenflügen mit einer relativ langen Flugdauer den an Bord befindlichen Besatzungsmitgliedern zum Ausruhen. Ruheräume können an verschiedenen Stellen innerhalb des Flugzeugs positioniert werden, was insbesondere von dem betreffenden Flugzeugtyp bzw. seiner Größe abhängig ist. So sind etwa Ruheräume bekannt, die sich oberhalb einer Passagierkabine befinden und sich von einem Bereich der Kabinendecke bis zu der Oberseite des Flugzeugrumpfs erstrecken, wie beispielsweise in EP 0901964 gezeigt. In solchen Überkopf-Ruheräumen ist das Anordnen eines schmalen und niedrigen Gangs vorteilhaft, so dass sich die innerhalb des Ruheraums befindlichen Besatzungsmitglieder beispielsweise von einem Eingangsbereich zu einem Schlafbereich bewegen können. Dieser Gang verläuft zwischen zwei Wandungen, die sich von einem Fußboden des Ruheraums nach unten in Richtung Kabine erstrecken. Dieser Gang ist beispielsweise so ausgeführt, dass eine freie Gehhöhe bis zu 1,5 m erreicht werden kann. Aus diesem Grunde sind die den Gang begrenzenden Wandungen an der Unterseite des Ruheraums relativ stark ausgeprägt, so dass der darunter befindliche Raum kaum für andere Einbauten als für Passagiersitze oder Trennwände verwendet werden kann.

US 6 520 451 B1 zeigt eine Ruheraumanordnung für Langstreckenflüge, die in einem Deckenbereich einer Flugzeugkabine angeordnet ist, wobei ein darunter liegendes Monument einen Ausschnitt zum Bereitstellen eines Eingangsbereichs zu einem Gang aufweist.

Größere Monumente, wie beispielsweise Flugzeugtoiletten, die in mittleren (Center) Bereichen der Kabine angeordnet werden und auf herkömmliche im Wesentlichen quaderförmige Weise aufgebaut sind, lassen sich nicht unterhalb eines solchen Ruheraums integrieren, da deren Bauhöhen so groß sind, dass der Gang des Ruheraums in darunter befindliche Toilettenräume ragen würde. Dadurch wären die Toilettenräume nur gebückt begeh- und benutzbar, was jedoch den Komfort innerhalb der Flugzeugkabine stark einschränken würde.

### ZUSAMMENFASSUNG DER ERFINDUNG

Die Aufgabe der Erfindung ist daher, eine Ruheraumanordnung in einem Flugzeug vorzuschlagen, bei der besonders ergonomisch und platzsparend Monumente und darüber angeordnete Ruheräume kombiniert werden können, möglichst ohne die Ergonomie und den Komfort einzuschränken.

Diese Aufgabe wird bei einer Ruheraumanordnung mit den Merkmalen des Oberbegriffs des Anspruchs 1 durch die Merkmale des kennzeichnenden Teils von Anspruch 1 gelöst.

Die erfindungsgemäße Ruheraumanordnung sieht eine oder mehrere in Form von beispielsweise Toiletten ausgeführten Monumenten unterhalb des Ruheraums vor, wobei der abgesenkte Gang des Ruheraums oberhalb der Toiletten verläuft. Dazu sind die Toilettenräume so konstruiert, dass sie jeweils eine Ausnehmung bzw. Vertiefung aufweisen, unterhalb der sich der Sitzbereich innerhalb der Toilette befindet. Da im Sitzbereich keine besonders große Deckenhöhe innerhalb der Toilette gefordert ist, wird der Komfort des sich in der Toilette befindenden Passagiers durch die Ausnehmung auch nicht gemindert. Dieser erfindungsgemäße Gedanke kann auch für eine Anordnung von mehreren nebeneinander angeordneten Toiletten nebeneinander aufgegriffen werden, so dass durch eine besonders geschickte Verschachtelung der Toiletten der abgesenkte Gang des Ruheraums oberhalb der Toiletten verlaufen kann, jedoch die Grundfläche der Toiletten nicht vergrößert werden muss und der unter dem Gang befindliche Platz dadurch besonders gut ausgenutzt werden kann. Bei der Verschachtelung mehrerer Toiletten ist es dabei besonders vorteilhaft, wenn die Vertiefungen bzw. Ausnehmungen oberhalb der Sitzbereiche so nebeneinander angeordnet werden, dass sie aneinandergereiht unterhalb des Ruheraumgangs verlaufen. Der Sitzbereich innerhalb einer Toilette kann dementsprechend auch relativ schmal ausgeführt werden, so dass die Breite der Toilettenwandung im Sitzbereich stark abnimmt und dadurch etwa eine geschwungene oder abgeschrägte Form an der Außenseite aufweist. Die auf diese Weise geformten Toiletten könnten beispielsweise um 180° versetzt nebeneinander angeordnet werden, so dass sich beispielsweise zwei Toiletten eine möglichst kleine Grundfläche teilen und die Sitzbereiche in Flugzeuglängsrichtung aneinander anschließen. Oberhalb der auf diese Weise angeordneten Sitzbereiche befindet sich dann ein durchgängiger Ausschnitt bzw. eine durchgängige Vertiefung zur Aufnahme des Gangs der Ruheraumanordnung.

Im Anschluss an eine oder mehrere Toiletten könnte ein Aufgangsbereich für den Ruheraum angeordnet werden, der beispielsweise eine Treppe oder Leiter beinhaltet, die das Aufsteigen des Flugpersonals in den Ruheraum ermöglicht. Ein nicht genutzter Teil innerhalb der Grundfläche dieses Aufgangbereichs kann für das Verstauen von Gegenständen, etwa Trolleys, verwendet werden.

Durch die erfindungsgemäße Anordnung von Toilette und Ruheraum mit einem abgesenkten Gang ist es möglich, den in der Kabine zur Verfügung stehenden Raum optimal auszunutzen, ohne jedoch die Ergonomie und den Komfort einzuschränken. Weiterhin entsteht dadurch Potential zur Gewinnung von zusätzlichem Stauraum und die Monumente innerhalb der Kabine im Ruheraumbereich werden raumsparend angeordnet, so dass sich die Flexibilität zur Kabinengestaltung steigern lässt.

### KURZE BESCHREIBUNG DER ZEICHNUNGEN

Die Erfindung wird anhand von Figuren näher erläutert. In den Figuren stehen gleiche Bezugszeichen für gleiche Objekte. Es zeigen:
- Fig. 1:: ein Querschnitt einer herkömmlichen Ruheraumanordnung mit einem Aufgang und einem Gangbereich;
- Fig. 2:: eine dreidimensionale Ansicht einer Toilette nach dem erfindungsgemäßen Gedanken;
- Fig. 3a-b:: zwei verschachtelt angeordnete Toiletten in einer 3D-Ansicht und einer Draufsicht; und
- Fig. 4:: eine dreidimensionale Ansicht einer erfindungsgemäßen Ruheraumanordnung.

### DETAILLIERTE BESCHREIBUNG EXEMPLARISCHER AUSFÜHRUNGSBEISPIELE

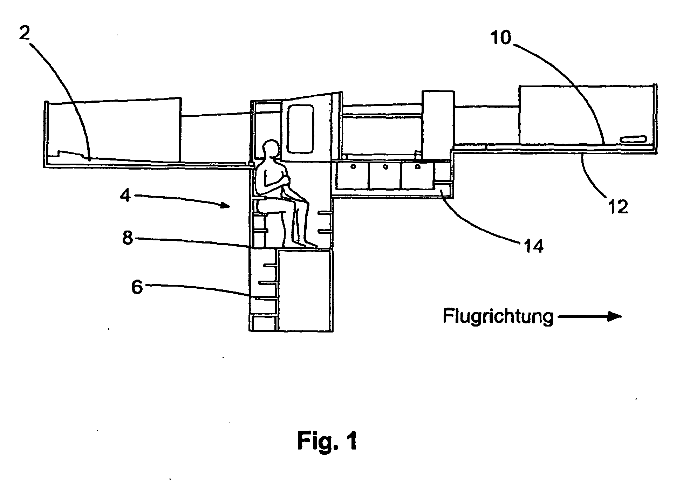

In Fig. 1 wird ein grundlegendes Prinzip eines Ruheraums in einer Flugzeugkabine gezeigt. Auf der linken Seite befindet sich eine erste Liege 2, die beispielsweise durch einen Aufgang 4 über Stufen 6 erreicht werden kann. Der Aufgang 4 kann beispielsweise eine Zwischenebene 8 aufweisen, unter der ein zusätzlicher Stauraum geschaffen werden könnte, der beispielsweise zum Aufnehmen von Trolleys geeignet ist Auf der rechten Seite der Fig. 1 ist eine zweite Liege 10 positioniert, die beispielhaft über einen vom Boden 12 abgesenkten Gang 14 erreichbar ist. Der Gang 14 kann dabei gebückt durchschritten werden, um die zweite Liege 10 zu erreichen. Da der Gang 14 nach unten in die Kabine hineinragt, sind herkömmliche Toiletten in diesem Bereich nicht positionierbar, da die normale Bauhöhe einer Toilette eine größere Raumhöhe als nur bis zur Unterseite des Gangs 14 erfordern würde.

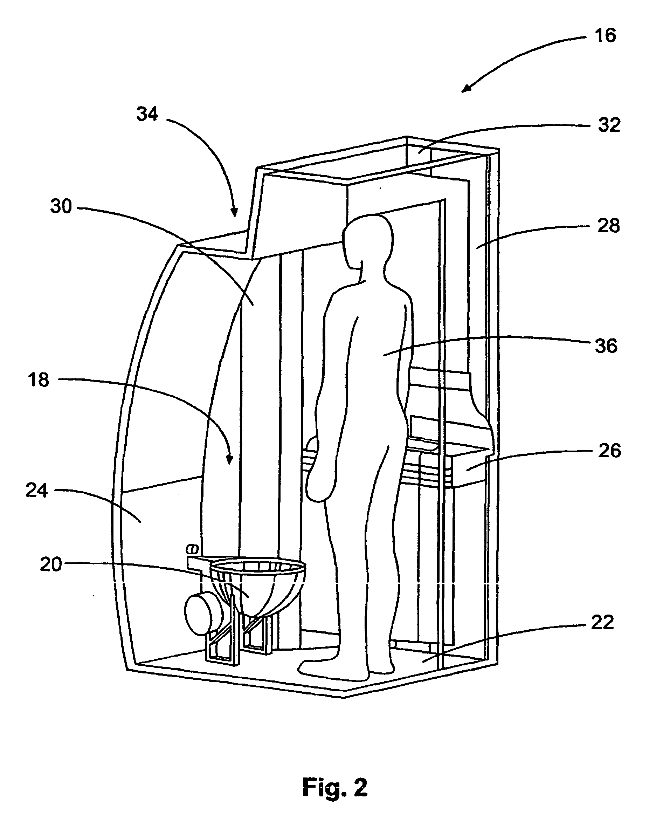

Aus diesem Grunde sind die wie in Fig. 2 dargestellt konstruierten Toiletten 16 für die erfindungsgemäße Ruheraumanordnung vorgesehen. Die Toilette 16 besteht im Wesentlichen aus einem Sitzbereich 18 mit einer Toilettenschüssel 20, die sich auf einem Boden 22 befindet. Der Boden 22 wird durch Wandungen 24, 26, 28, 30 und 32 umgeben, so dass ein geschlossener Toilettenraum entsteht. An der Oberseite des Toilettenraums befindet sich eine Vertiefung bzw. Ausnehmung 34, durch die die Wandungen 24, 28 und 30 jeweils einen Absatz aufweisen. Diese Ausnehmung 34 befindet sich direkt über der Toilettenschüssel 20 und dient zur Aufnahme mindestens eines Bereichs des abgesenkten Gangs 14 der Ruheraumanordnung. Da sich eine Person 36 bei der Benutzung der Toilettenschüssel 20 entweder vor dieser Toilettenschüssel 20 stehend aufhält oder auf ihr sitzt, ist es nicht erforderlich, im Bereich über der Toilettenschüssel 20 die vollständige Raumhöhe zur Verfügung zu stellen. Aus diesem Grunde sinkt der Komfort für die Person 36 im Bereich der Toilettenschüssel 20 nicht, denn die Einschränkung im Kopfhöhenbereich wird nicht als störend wahrgenommen.

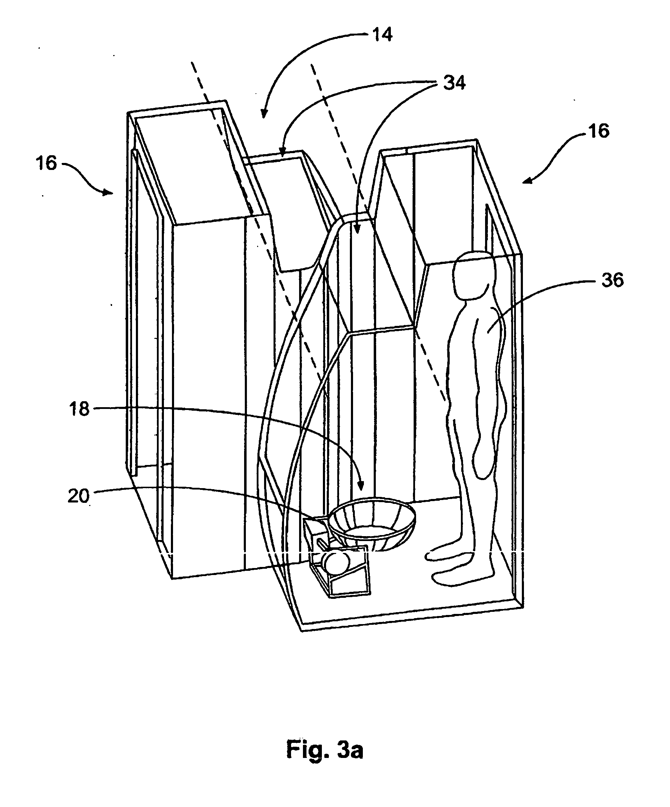

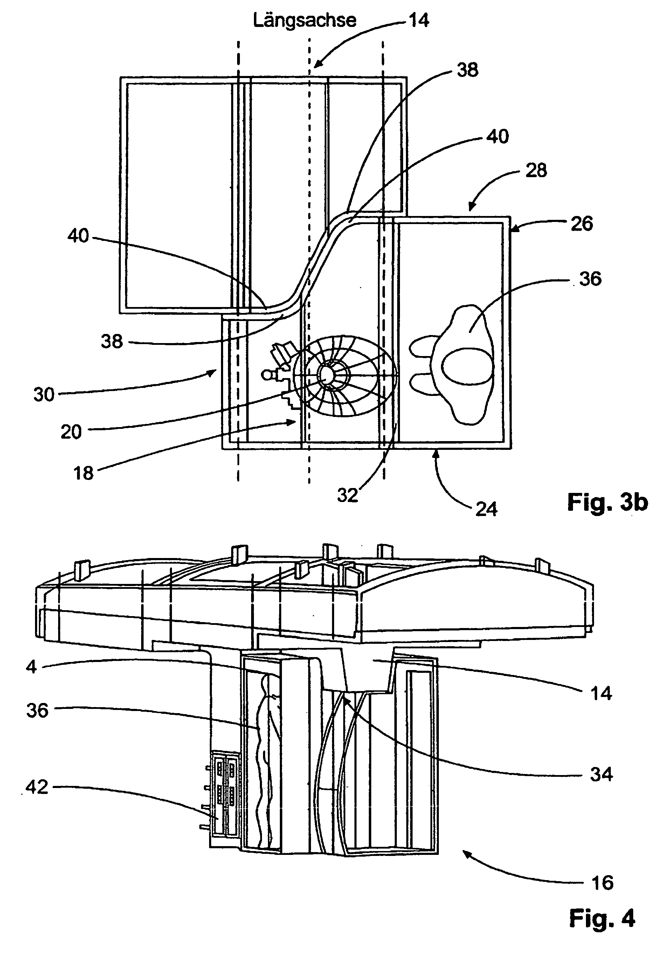

In Fig. 3a und 3b werden zwei Toiletten 16 dargestellt, die ineinander verschachtelt sind und durch die Ausnehmungen 34 gemeinsam ausreichend Raum für einen Gang 14 unterhalb eines Ruheraums bereitstellen. Dabei sind die jeweiligen Wandungen 28 der beiden Toiletten so geformt, dass sich beide Toilettenräume um 180° in einer Position derart aneinander anschmiegen, dass die Toilettenschüsseln 20 der beiden Toilettenräume im Wesentlichen nebeneinander angeordnet sind und die darüber befindlichen Ausnehmungen 34 eine für den Gang 14 ausreichende Gesamtbreite zur Verfügung stellen. In Fig. 3b wird beispielhaft eine S-förmige Gestaltung der Wandungen 38 dargestellt. Die abgerundeten Ecken 38 und 40 sind so angeordnet, dass sie bei 180°-Drehung der beiden Toilettenräume miteinander korrespondieren und die Toilettenräume in der gewünschten Anordnung nebeneinander positioniert werden können. Andererseits ist es auch denkbar, mit mehr als nur zwei Toilettenräumen solche erfindungsgemäßen Verschachtelungen herzustellen, bei denen jedoch die Form der Wandungen bevorzugt möglichst miteinander korrespondieren sollten.

Fig. 4 zeigt schließlich beispielhaft zwei Toiletten 16 mit Ausnehmungen 34, in die ein nach unten ragender Gang 14 des Ruheraums eingelassen ist. Der Bereich im Anschluss links neben den Toiletten 16 stellt beispielsweise den Aufgang 4 dar, in dem auch ein Stauraum geschaffen werden kann, der exemplarisch mit eingestellten Trolleys abgebildet ist.

Die erfindungsgemäße Ruheraumanordnung weist bedeutende Vorteile gegenüber Ruheraumanordnungen aus dem Stand der Technik auf. Zum einen entsteht durch die geschickte Gestaltung der Toiletten ein Potential zur Gewinnung von zusätzlichem Stauraum. Die Monumente innerhalb der Passagierkabine können raumsparend angeordnet werden, dadurch wird der zur Verfügung stehende Raum optimal ausgenutzt und die Flexibilität bei der Kabinengestaltung gesteigert.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen

- 2: erste Liege
- 4: Aufgang
- 6: Stufen
- 8: Zwischenebene
- 10: zweite Liege
- 12: Boden des Ruheraums
- 14: Gang des Ruheraums
- 16: Toilette
- 18: Sitzbereich
- 20: Toilettenschüssel
- 22: Boden der Toilette
- 24-32: Wandung der Toilette
- 34: Ausnehmung
- 36: Person
- 38: abgerundete Ecke
- 40: abgerundete Ecke
- 42: Trolley

## Patentansprüche

1. Ruheraumanordnung für eine Kabine eines Flugzeugs,
mit einem Ruheraum und mindestens zwei Monumenten (16),
wobei der Ruheraum oberhalb der Monumente (16) angeordnet ist und einen sich von einem Ruheraumboden in Richtung der Monumente erstreckenden Gang (14) aufweist,
wobei die Monumente (16) jeweils mindestens eine Wandung (24, 26, 28, 30, 32) aufweisen, die direkt oberhalb eines darin befindlichen Sitzbereichs (18) eine Ausnehmung (34) bildet,
**dadurch gekennzeichnet, dass** die Monumente (16) nebeneinander so angeordnet sind, dass deren Ausnehmungen (34) zum Aufnehmen des Gangs (14) aneinander anschließen,
dass die Monumente (16) an einer oder mehreren Seiten eine zumindest bereichsweise abgewinkelte oder geschwungene Form (38, 40) aufweisen, die sich an eine korrespondierend geformte Wandung (40, 38) eines weiteren Monuments (16) anschmiegen kann und
dass die Breite der Wandung im Sitzbereich abnimmt.

2. Ruheraumanordnung nach Anspruch 1,
**dadurch gekennzeichnet, dass** mindestens ein Monument (16) eine Flugzeugtoilette ist.

3. Ruheraumanordnung nach einem der vorhergehenden Ansprüche,
**dadurch gekennzeichnet, dass** sich mindestens ein Monument (16) unter dem Gang (14) an einen Aufgang (4) zum Betreten des Ruheraums anschließt.

4. Ruheraumanordnung nach Anspruch 3,
**dadurch gekennzeichnet, dass** sich unterhalb des Aufgangs (4) ein Stauraum befindet.

5. Ruheraumanordnung nach Anspruch 4,
**dadurch gekennzeichnet, dass** der Stauraum zur Aufnahme von Trolleys (42) geeignet ist.

6. Monument (16) für eine Passagierkabine eines Flugzeugs, mit einem Sitzbereich (18) und mindestens einer Wandung,
**dadurch gekennzeichnet, dass** die Wandung (24, 26, 28, 30, 32) direkt oberhalb des Sitzbereichs (18) eine Ausnehmung (34) zur Aufnahme eines sich von einem Boden eines über dem Monument angeordneten Ruheraums in Richtung des Monuments erstreckenden Gangs (14) aufweist,
dass die Wandung an einer oder mehreren Seiten eine zumindest bereichsweise abgewinkelte oder geschwungene Form (38, 40) aufweist, die sich an eine korrespondierend geformte Wandung (40, 38) eines weiteren Monuments (16) anschmiegen kann und
dass die Breite der Wandung im Sitzbereich abnimmt.

7. Monument nach Anspruch 6, das als Flugzeugtoilette (16) ausgeführt ist.

8. Flugzeug mit einer Kabine und einer darin installierten Ruheraumanordnung nach einem der Ansprüche 1-5.

## Claims

1. A rest compartment arrangement for a cabin of an aircraft,
having a rest compartment and at least two monuments (16),
wherein the rest compartment is arranged above the monuments (16) and comprises a passage (14) that extends from a rest compartment floor in the direction of the monuments,
wherein the monuments (16) each comprise at least one wall (24, 26, 28, 30, 32) which above a seat region (18) situated therein forms a recess (34),
**characterized in that** the monuments (16) are arranged next to each other in such a manner that their recesses (34) follow on from each other in order to accommodate the passage (14),
**in that** the monuments (16) on one or several sides comprise a shape (38, 40) that at least in some regions is angled or curved, which shape can conform to a correspondingly shaped wall (40, 38) of a further monument (16) and
**in that** the width of the toilet wall in the seat region is reduced.

2. The rest compartment arrangement of claim 1,
**characterized in that** at least one monument (16) is an aircraft toilet.

3. The rest compartment arrangement of any one of the preceding claims,
**characterized in that** at least one monument (16) underneath the passage (14) follows on from an ascent (4) for entering the rest compartment.

4. The rest compartment arrangement of claim 3,
**characterized in that** underneath the ascent (4) there is a stowage space.

5. The rest compartment arrangement of claim 4,
**characterized in that** the stowage space is suitable to accommodate trolleys (42).

6. A monument (16) for a passenger cabin of an aircraft with a seat region (18) and at least one wall,
**characterized in that** the wall (24, 26, 28, 30, 32) above the seat region (18) comprises a recess (34) for accommodating a passage (14) that extends from a floor of a rest compartment arranged above a cabin floor in the direction of a cabin floor,
**in that** the wall on one or several sides comprise a shape (38, 40) that at least in some regions is angled or curved, which shape can conform to a correspondingly shaped wall (40, 3 8) of a further monument (16) and
**in that** the width of the toilet wall in the seat region is reduced.

7. The monument of claim 6, which is designed as an aircraft toilet (16).

8. An aircraft having a cabin and a rest compartment arrangement of any one of claims 1-5 installed therein.

## Revendications

1. Agencement d'une zone de repos pour une cabine de passagers d'un avion, comportant une zone de repos et au moins deux structures (16),
la zone de repos étant disposée au-dessus des structures (16) et présentant un passage (14) s'étendant d'un plancher de la zone de repos en direction des structures,
les structures (16) présentant chacune au moins une paroi (24, 26, 28, 30, 32), qui forme un évidement (34) directement au-dessus d'une zone de siège (18) se trouvant à l'intérieur, **caractérisé par le fait que** les structures (16) sont disposées côte à côte de telle sorte que leurs évidements (34) se joignent entre eux pour recevoir le passage (14),
que les structures (16) présentent sur une ou plusieurs faces une forme (38, 40) au moins partiellement repliée ou arrondie, qui peut se plaquer à une paroi (40, 38) formée en correspondance mutuelle d'une structure (16) supplémentaire et
que la largeur de la paroi diminue dans la zone de siège.

2. Agencement d'une zone de repos selon la revendication 1,
**caractérisé par le fait qu'**au moins une structure (16) sont des toilette d'avion.

3. Agencement d'une zone de repos selon l'une des revendications précédentes,
**caractérisé par le fait qu'**au moins une structure (16) se raccorde sous le passage (14) à un escalier (4) pour pénétrer dans la zone de repos.

4. Agencement d'une zone de repos selon la revendication 3,
**caractérisé par le fait qu'**un espace de rangement se trouve sous l'escalier (4).

5. Agencement d'une zone de repos selon la revendication 4,
**caractérisé par le fait que** l'espace de rangement convient à la réception de chariots (42).

6. Structure (16) pour une cabine de passagers d'un avion, avec une zone de siège (18) et au moins une paroi,
**caractérisée par le fait que**
la paroi (24, 26, 28, 30, 32) présente directement au-dessus de la zone de siège (18) un évidement (34) pour la réception d'un passage (14) s'étendant d'un plancher de la zone de repos disposé au-dessus de la structure en direction de la structure, que
la paroi présente sur une ou plusieurs faces une forme (3 8, 40) au moins partiellement repliée ou arrondie, qui peut se plaquer sur une paroi (40, 38) formée en correspondance mutuelle d'une structure (16) supplémentaire, et que
la largeur de la paroi diminue dans la zone de siège.

7. Structure selon la revendication 6, qui est réalisée sous la forme de toilettes d'avion (16).

8. Aéronef comportant une cabine et un agencement de zone de repos y étant installé selon l'une des revendications 1 à 5.
